# EUROPEAN PATENT APPLICATION

(11) **EP 1 698 749 A2**
(43) Date of publication of application: **06.09.2006**
(21) Application number: 06075450.4
(22) Date of filing: 27.02.2006
(51) Int. Cl.: E05B 73/00, G07F 17/10, B62H 3/00, G07C 9/00

(54) **Control unit for a lock**

(30) Priority: 25.02.2005 NL 1028407
(71) Applicant: P.M. Van Loon Beheer B.V., 4513 AG Eindhoven (NL)
(72) Inventor: van Loon, Paul Marie, 4513 AG Eindhoven (NL)
(74) Representative: Verhees, Godefridus Josephus Maria

(57) **Abstract**

A control unit 1 for a lock 3 is provided with control devices to operate a blocking mechanism of the lock 3. The blocking mechanism can here block bolting devices 9, which have a turnable connection to a cycle rack 5, from turning when in a bolted position.

The control unit 1 has a holder for a coin, as well as a space in which there is a further coin, which serves as a reference to check if the inserted coin belongs to this control unit. The control unit releases the removable coin if a cycle wheel 7 is placed in the cycle rack 5 and the lock closes. To release the cycle, the control unit is provided with an insertion slot 17 via which the coin can be inserted into the control unit.

The coins are provided with microchips with a unique code that makes a unique combination of the two coins together.

## Description

### BACKGROUND OF THE INVENTION:

### Field of the invention

The invention relates to a control unit for a lock, which lock comprises at least one bolting device that can be moved between a bolted position and one or more freed positions, as well as a blocking mechanism to block the bolting device in the bolted position, which control unit comprises control devices to operate the blocking mechanism, as well as a holder for a coin. A coin is here defined as any object that is suitable for the desired function, for example also a key.

### Prior art

Such a control unit for a lock is generally known and is for example used in shopping trolleys or lockers in a station or swimming baths. If such a control unit is used on a shopping trolley, there is a key in the lock ,which is attached to another shopping trolley and which is bolted in the lock. The key is released and the shopping trolley is freed from the other shopping trolley by placing a coin, often a 50 eurocent coin, in the holder and by pushing this into the closed position. Such a lock can be unlocked by anybody with a 50 eurocent coin. This makes the lock unsuitable for the protection of personal property.

If such a control unit is used in a locker, the bolting device is in a freed position and a key is held. The bolting device can be turned to the bolted position and the key can be removed if a coin is inserted. The disadvantage of this control unit is that if a user loses the key, the lock has to be adapted or changed by the minder so that this key no longer fits (otherwise unauthorised persons who find the key could open the locker unwanted).

### Summary of the invention

An objective of the invention is to provide a control unit for a lock of the sort described in the preamble for which the user does not have to have a suitable coin. For this purpose the control unit according to the invention is characterised in that it is made so that if the control devices release the bolting device, the coin is present in the holder, and if the control devices are blocking the bolting device, the control unit releases the coin, so that the control devices only release the bolting device if the coin is placed in the holder. This coin is released as soon as the lock is bolted. Afterwards the lock can only be opened again with this unique coin.

It must be ensured that the coin can only be released if the lock is locking what it is intended to lock. For example, if this control unit is used in a cycle rack, then it must only be possible to bolt the lock if a cycle wheel is in the rack. This can be detected for example by means of a suitable presence detector. This will prevent the lock from being bolted and the coin from being released, so that others can no longer use the lock.

Moreover, the coin preferably has a microchip and the control unit is provided with a reader to read the information in the chip. This can easily prevent a coin from being forged and the locked object from thus being stolen.

An embodiment of the control unit according to the invention is characterised in that a further coin is present in the control unit, which forms a unique set together with the removable coin, and in that the control unit comprises comparing devices that compare the coin in the control unit with the removable coin, so that the control devices only operate the blocking mechanism to release the bolting device if both coins belong together. The user or a third party can not remove the further coin from the control unit. Only the minder of the control unit can for example obtain access with a key to the space in the control unit where the further coin is to be found. The advantage of this is that if the user loses the removable coin, the minder does not have to adapt or change the lock; he only has to replace the further coin by another coin and can unlock the bolting device with the coin belonging to this other coin. This means the expenses for the user if he loses the coin will be lower than in the well-known control unit. The information stored in the microchip can be used to determine if the removable coin belongs to or is identical to the further coin.

A further embodiment of the control unit according to the invention is characterised in that the coin is as big as a 50 eurocent coin. The advantage of this is that the coin can also be used for a shopping trolley if for example this lock is used on a cycle rack in a supermarket.

### Brief description of the drawings

The invention will be elucidated more fully below on the basis of drawings in which an embodiment of the control unit according to the invention is shown. In these drawings:
Figure 1 shows an embodiment of the control unit according to the invention as used on a cycle rack; and
Figure 2 shows a horizontal cross-section of the control unit and cycle rack shown in figure 1.

### Detailed description of the drawings

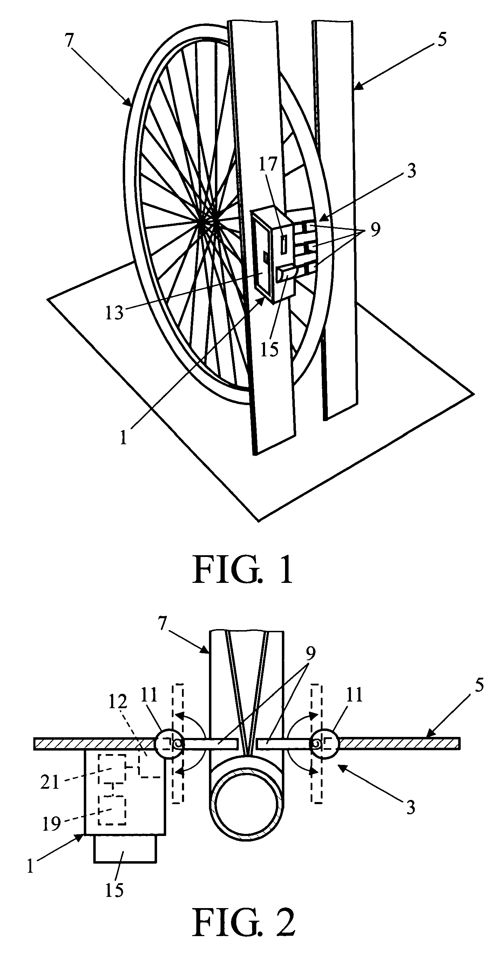

Figures 1 and 2 show an embodiment of the control unit 1 according to the invention to operate a lock 3, as used on a cycle rack 5, in perspective and cross-section respectively. The cycle rack 5 is here depicted by two vertical strips with a slot between them, in which the front wheel of a cycle can be inserted. Only the front wheel 7 of the cycle is shown for reasons of clarity.

The lock 3 is provided with bolting devices 9 that have a turnable connection with the cycle rack 5, and which can be moved between a bolted position (shown in figure 2 by a full line) and two extreme freed positions (shown in figure 2 by dotted lines). The bolting devices 9 can be blocked against turning when in the bolted position by a blocking mechanism 11. The blocking mechanism 11 is here only shown schematically. Any known blocking mechanism can be used for this, for example an electro-mechanically operated blocking catch.

The control unit 1 is provided with control devices 12 that operate the blocking mechanism 11. There is a holder (not shown) in the control unit 1 for a coin and a space (also not shown) in which there is a further coin that serves as the reference to check if the inserted coin belongs to this control unit. The further coin can only be removed from the control unit by the minder of the lock, for example via a closable hatch 13 in the side of the control unit 1. The removable coin is released by the control unit, for example into the tray 15, if a cycle wheel 7 is placed in the position shown in figure 1 and the lock closes. Suitable detection devices (not shown) should be present at a suitable place to determine this. The control unit has an insertion slot 17 via which the coin can be placed in the control unit to release the cycle.

The coins are provided with microchips with a unique code that makes a unique combination of the two coins together. The coins are therefore only made in sets of two. The coins are moreover as big as a 50 eurocent coin, so that they can also later be used to collect a shopping trolley. The control unit is provided with electronic reading devices 19 to read the codes from the chips on the coins. Moreover, the control unit is provided with electronic comparing devices 21 to compare the codes with each other. The comparing devices 21 are connected to the control devices 12 to operate the blocking mechanism 11.

The blocking mechanism 11 cannot block the bolting devices 9 from turning if the coin is present in the control unit 1. The blocking mechanism 11 will block the bolting devices 11 and simultaneously the control unit 1 will release the coin only if a cycle is placed in the cycle rack. The bolting devices 9 can then only be turned back to the freed position if a coin, which uniquely matches the other coin present in the control unit, is again inserted into the control unit 1. The coin is therefore in the control unit if the lock is not in use.

Although in the above the invention is explained on the basis of the drawings, it should be noted that the invention is in no way limited to the embodiment shown in the drawings. The invention also extends to all embodiments deviating from the embodiment shown in the drawings within the context defined by the claims.

## Claims

1. Control unit for a lock, which lock comprises at least one bolting device that can be moved between a bolted position and one or more freed positions, as well as a blocking mechanism to block the bolting device in the bolted position, which control unit comprises control devices to operate the blocking mechanism, as well as a holder for a coin, **characterised in that** the control unit is made so that if the control devices release the bolting device, the coin is present in the holder, and if the control devices are blocking the bolting device, the control unit releases the coin, so that the control devices only release the bolting device again if the coin is placed in the holder.

2. Control unit according to claim 1, **characterised in that** the control unit is provided with a presence detector that only releases the control unit for use if an object to be locked, for which the lock is intended, is detected in the correct position.

3. Control unit according to claims 1 or 2, **characterised in that** the coin is provided with a microchip and **in that** the control unit is provided with a reader to read the information present in the chip.

4. Control unit according to claims 1, 2 or 3, **characterised in that** a further coin is present in the control unit, which forms a unique set together with the removable coin, and **in that** the control unit comprises comparing devices that compare the further coin present in the control unit with the removable coin, so that the control devices only operate the blocking mechanism to release the bolting device if both coins belong together.

5. Control unit according to one of the preceding claims, **characterised in that** the coin is as big as a 50 eurocent coin.
